# FASCICULE DE BREVET EUROPEEN

(11) **EP 1 441 155 B1**
(45) Date de publication et mention de la délivrance du brevet: **14.03.2007**
(21) Numéro de dépôt: 04290148.8
(22) Date de dépôt: 20.01.2004
(51) Int. Cl.: F16H 61/28

(54) **Dispositif de commande de boîte de vitesses permettant un changement de rapport accéléré, et méthode de changement de rapport associé**
Steuervorrichtung für ein Schaltgetriebe zum schnelleren Schalten, mit dem zugehörigen Schaltverfahren
Command device for a gearbox allowing a faster speed change and method to shift into the associated gear

(30) Priorité: 22.01.2003 FR 0300673; 24.09.2003 FR 0311200
(43) Date de publication de la demande: 28.07.2004
(73) Titulaire: Peugeot Citroën Automobiles S.A., 78140 Vélizy Villacoublay (FR)
(72) Inventeur: Wascheul, Michael, 78260 Acheres (FR); Gabucci, Stéphane, 92250 La Garenne Colombes (FR)
(74) Mandataire: Thinat, Michel

(56) Documents cités:
- EP-A- 0 652 391
- EP-A- 0 695 892
- DE-A- 10 052 935
- US-A- 5 970 815
- US-A- 6 003 649

## Description

L'invention concerne en général les boîtes de vitesses pour véhicules automobiles.

Plus précisément, l'invention concerne, selon un premier aspect, un dispositif de commande d'une boîte de vitesses manuelle pilotée comprenant un organe de sélection sélectivement mobile par coulissement suivant un axe longitudinal X-X' entre une pluralité de positions axiales prédéterminées, et un doigt de passage de vitesses lié en translation longitudinale à l'organe de sélection et sélectivement mobile d'abord par coulissement longitudinal de l'organe de sélection entre une pluralité de positions longitudinales de sélection correspondant aux positions axiales de l'organe de sélection et dans lesquelles le doigt est engagé dans l'un de plusieurs éléments d'engagement de rapports de la boîte de vitesses formant un empilement longitudinal, le dispositif de commande interne comprenant également un organe d'engagement déplaçant sélectivement le doigt à partir de chacune des positions de sélection jusqu'à une d'une pluralité de positions d'engagement pour réaliser l'engagement des rapports, le doigt déplaçant par ce mouvement l'élément d'engagement correspondant et venant s'intercaler dans l'empilement.

Des dispositifs de ce type sont connus de l'art antérieur notamment par le brevet US 6 003 649, et sont implantés en particulier sur des véhicules à caractère sportif. Raccourcir le temps nécessaire au changement de rapports est un souci constant des constructeurs sur ce type de véhicule.

La présente invention vise à répondre à cet objectif.

En outre, les différents modes de réalisation du dispositif de commande d'une boîte de vitesses manuelle pilotée décrits dans le brevet US 6 003 649 ont pour inconvénient majeur d'être extrêmement encombrants en direction transversale à l'axe longitudinal de l'arbre central de sélection puisqu'ils utilisent un genre de tambour à rainures coopérant avec un axe pour entraîner en rotation un disque ou un levier s'étendant transversalement à l'arbre de sélection de vitesses d'un côté de celui-ci pour le faire tourner à une disposition d'engagement d'une vitesse sélectionnée.

La présente invention a également pour but d'éliminer l'inconvénient ci-dessus du dispositif faisant l'objet du brevet US 6 003 649 en proposant un dispositif de commande d'une boîte de vitesses manuelle pilotée comprenant les caractéristiques de la revendication 1.

Ainsi, l'ensemble à sélection et de passage de vitesses de l'invention est extrêmement compact et peu encombrant en direction longitudinale de l'arbre d'engagement.

Le doigt de passage peut comprendre une partie interne à la cage coopérant avec l'arbre d'engagement et une partie externe, solidaire de la partie interne, faisant saillie vers l'extérieur de la cage à travers une fente longitudinale de celle-ci, la fente présentant une largeur adaptée au mouvement d'engagement par rotation du doigt autour de l'axe longitudinal X-X'.

Avantageusement, le dispositif de commande comprend un organe de verrouillage en position des éléments d'engagement dans lesquels le doigt de passage n'est pas engagé.

De préférence, l'organe de verrouillage est lié au doigt de passage en translation longitudinale, et comprend une partie de guidage interne à la cage et guidée en translation par la cage, et une partie de blocage solidaire de la partie de guidage et faisant saillie vers l'extérieur de la cage à travers la fente.

Par exemple, la partie de blocage de l'organe de verrouillage comprend deux bras disposés de part et d'autre du doigt de passage, muni chacun d'une partie longitudinale s'étendant parallèlement à l'axe longitudinal X-X'.

Avantageusement, le dispositif de commande comprend un dispositif d'actionnement de l'organe de sélection, muni d'un organe moteur, d'un pignon entraîné en rotation par l'organe moteur, et d'une crémaillère solidaire de l'organe de sélection coopérant avec le pignon.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective du dispositif de commande selon l'invention,
- la figure 2 est une vue en perspective selon la flèche II de la figure 1, les tiges de commandes et les fourchettes n'étant pas représentées,
- la figure 3 est une vue en perspective selon la flèche III de la figure 2, la platine de commande sur laquelle le dispositif est fixé étant représentée,
- la figure 4 représente le détail IV de la figure 2 et montre l'agencement du doigt de passage et de l'organe de verrouillage sur l'arbre d'engagement,
- les figures 5A et 5C sont des représentations schématiques en coupe axiale des positions respectives de l'organe de sélection et du doigt de passage de la figure 1 à deux étapes de la méthode de changement de rapport,
- les figures 5B et 5D sont des représentations schématiques des positions respectives des éléments d'engagement et du doigt de passage de la figure 1 aux deux étapes de la méthode de changement de rapport des figures 5A et 5C,
- la figure 6 est une vue en perspective suivant la flèche VI de la figure 1, montrant le carter du dispositif et l'organe moteur entraînant l'organe de sélection,
- la figure 7 est une vue partielle suivant la flèche VII de la figure 6, et
- la figure 8 est une vue en perspective suivant la flèche VIII de la figure 1, pour une variante de réalisation de l'invention.

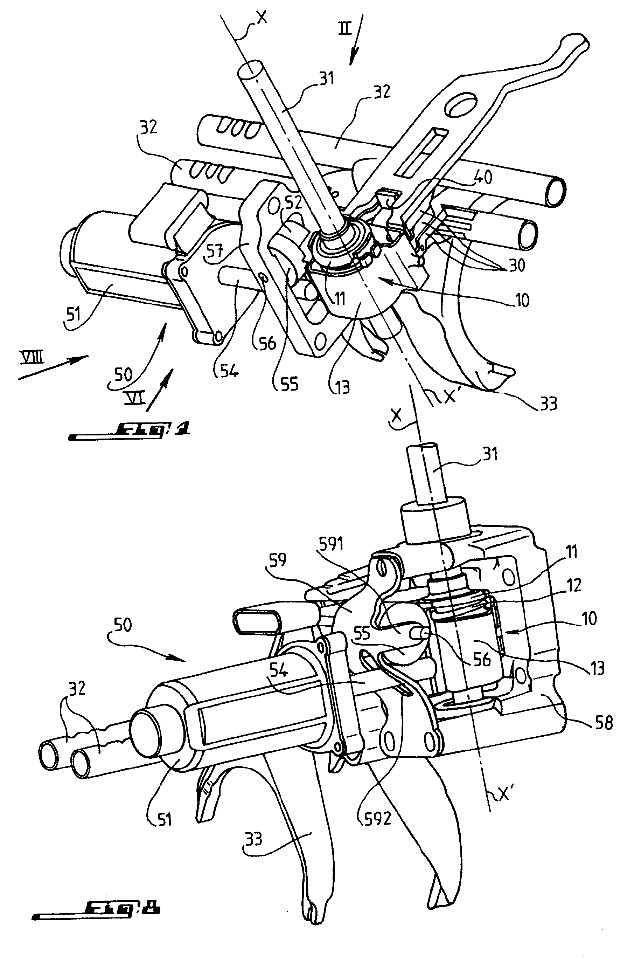

Le dispositif de commande de la figure 1 comprend un organe de sélection 10 sélectivement mobile par coulissement suivant un axe longitudinal X-X' entre une pluralité de positions axiales prédéterminées, et un doigt 20 de passage de vitesses lié en translation longitudinale à l'organe de sélection 10 et sélectivement mobile par coulissement longitudinal de l'organe de sélection 10 entre une pluralité de positions longitudinales de sélection correspondant aux positions axiales de l'organe de sélection.

Dans chaque position de sélection, le doigt 20 est engagé dans l'un de plusieurs éléments 30 d'engagement de rapports de la boîte de vitesses formant un empilement longitudinal.

Le dispositif de commande interne comprend également un organe d'engagement 31 déplaçant sélectivement le doigt 20 à partir chacune des positions de sélection jusqu'à une d'une pluralité de positions d'engagement pour réaliser l'engagement des rapports.

Les éléments d'engagement 30 sont pratiquement identiques et présentent chacun sensiblement la forme d'un U s'étendant dans un plan perpendiculaire à l'axe longitudinal X-X'. Ils sont liés chacun à une tige 32 de commande portant une fourchette 33 d'engagement de rapport.

Les éléments d'engagement en U 30 présentent chacun deux branches symétriques 301 délimitant un évidement central 302 ouvert vers l'axe longitudinal X-X'. Les évidements centraux 302 des différents éléments s'inscrivent parfaitement les uns dans le prolongement des autres et forment un sillon longitudinal dans lequel le doigt de passage 20 se déplace en passant d'une position de sélection à une autre.

Le doigt de passage 20 s'étend dans un plan perpendiculaire à l'axe longitudinal X-X'. Le doigt 20 est mince et plat. Il présente une épaisseur longitudinale correspondant à celle des éléments d'engagement 30, qui sont eux-mêmes également minces et plats.

Les tiges de commandes 301 sont mutuellement parallèles et s'étendent dans une direction perpendiculaire à la fois à l'axe longitudinal X-X' et au doigt de passage 20.

Le doigt 20 passe de sa position de sélection courante à une position d'engagement par rotation autour de l'axe longitudinal X-X', ce dont il résulte que le doigt pousse l'élément d'engagement correspondant à la position de sélection du côté d'une des branches 301, suivant le sens de rotation du doigt.

Le doigt 20 vient alors prendre la place de ladite branche 301 dans l'empilement longitudinal formé par les éléments d'engagement 30.

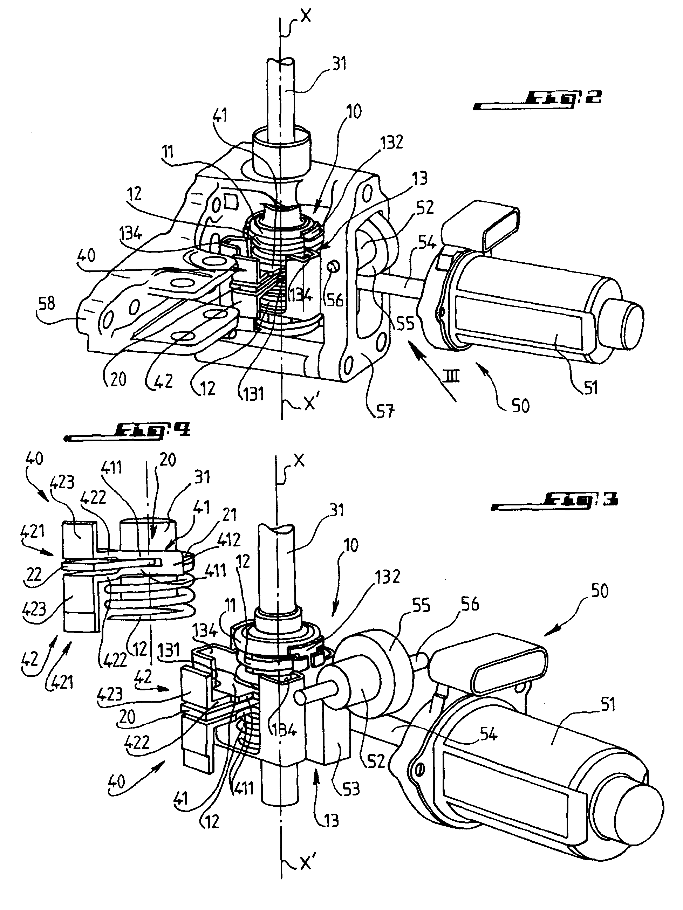

Selon l'invention, l'organe de sélection 10 comprend deux organes d'appui 11 mutuellement solidaires disposés de part et d'autre du doigt 20 le long de l'axe longitudinal X-X', et deux organes élastiques 12 interposés entre le doigt 20 et les organes d'appuis 11, comme le montre la figure 2.

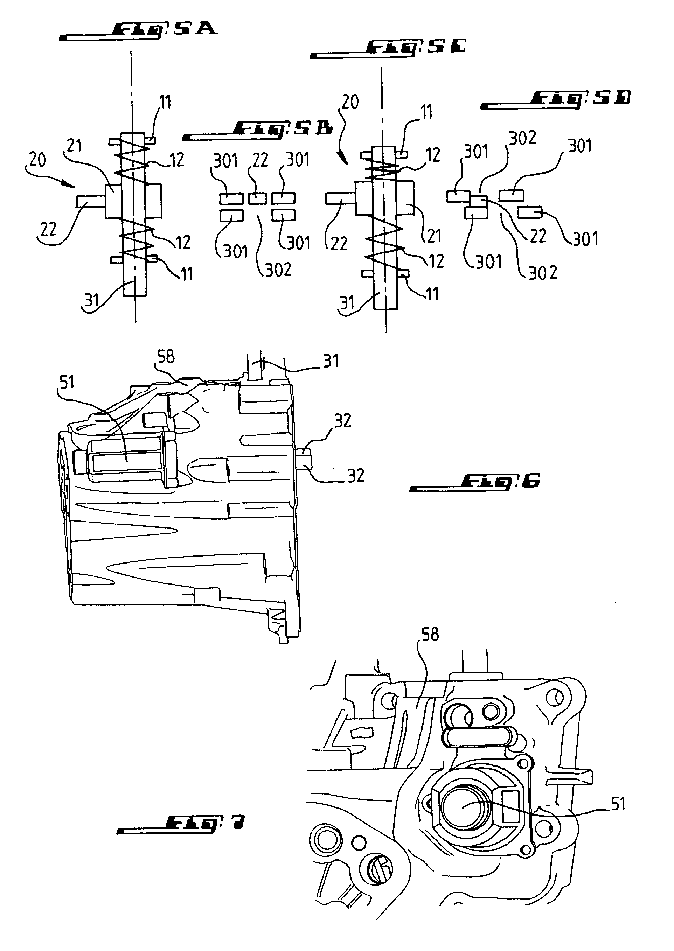

Ainsi, quand le doigt 20 est dans une position d'engagement, un déplacement de l'organe de sélection 10 d'une position axiale à une autre entraîne la compression de l'organes élastiques 12 qui se trouve du côté opposé au sens de déplacement de l'organe de sélection, comme le montrent les figures 5A et 5C. Le doigt 20 est maintenu en position par l'empilement, comme le montre la figure 5D. Il est sollicité par l'organe élastique 12 contre une branche 301 de l'élément d'engagement 30 se trouvant du côté du déplacement de l'organe de sélection 10, comme illustré sur les figures 5B et 5D.

Cette caractéristique permet de réaliser le changement de rapport selon la séquence suivante.
1/ Engager un premier rapport en déplaçant d'abord l'organe de sélection 10 jusqu'à une première position axiale correspondant à une première position de sélection du doigt de passage 20, puis déplacer le doigt de passage 20 jusqu'à une première position d'engagement par action de l'organe d'engagement 31; un premier rapport est engagé ;
2/ Déplacer l'organe de sélection 10 jusqu'à une seconde position axiale, ce qui a pour effet de comprimer un des organes élastiques 12 ; le doigt de passage 20 reste en place (voir figure 5D) ;
3/ Ramener le doigt 20 de sa première position d'engagement jusqu'à sa première position de sélection par action de l'organe d'engagement 31, l'organe élastique 12 comprimé se détendant alors et amenant automatiquement le doigt de passage 20 dans une seconde position de sélection correspondant à la seconde position axiale de l'organe de sélection 10 ; le premier rapport est alors désengagé ;
4/ Amener le doigt de passage 20 de sa seconde position de sélection à une seconde position d'engagement par action de l'organe d'engagement 30 ; un second rapport est engagé.

Le déplacement de l'organe de sélection 10 de sa première à sa seconde position de sélection se fait en temps masqué, c'est-à-dire à un moment où le premier rapport est toujours engagé.

On va maintenant expliquer en détails la constitution du dispositif de commande, en référence aux figures 2 à 4.

L'organe d'engagement 31 est un arbre d'engagement s'étendant suivant l'axe longitudinal X-X', le doigt d'engagement 20 étant lié à cet arbre en rotation autour de l'axe longitudinal X-X' pour réaliser le mouvement d'engagement et libre en translation longitudinale par rapport à cet arbre.

Plus précisément, le doigt d'engagement 20 comprend une partie interne 21 présentant un orifice cylindrique traversé par l'arbre d'engagement et de taille correspondant à la taille de celui-ci.

L'arbre d'engagement 31 porte un jeu de cannelures longitudinales, non représentées, coopérant avec un jeu de rainures longitudinales, non représentées, portées par le bord de l'orifice cylindrique.

L'organe de sélection 10 comprend une cage 13 de maintien des organes élastiques 11, traversée par l'arbre d'engagement 31, et solidaire des deux organes d'appui 11.

Les organes d'appuis 11 sont deux coupelles identiques présentant la forme de disques, disposées en vis-à-vis, coaxiales à l'axe longitudinal X-X'. Ces coupelles sont traversées en leurs centres par l'arbre d'engagement 31.

Les organes élastiques 12 sont des ressorts à spirale disposés autour de l'arbre d'engagement 31. Ils prennent appuis d'un côté longitudinal sur un des organes d'appui et sollicitent la partie interne 21 du doigt 20 par un côté longitudinal opposé.

La cage 13 comprend une partie cylindrique 132 conformée de façon à envelopper les organes élastiques 12, les organes d'appui 11 étant rigidement fixés à deux extrémités opposées de la partie 132 et venant les obturer.

L'organe de sélection 10 est libre en translation longitudinale et en rotation autour de l'axe longitudinal X-X' par rapport à l'arbre d'engagement 31.

Les organes d'appui 11 peuvent coulisser librement le long de l'arbre 31 et pivoter autour de celui-ci.

Le doigt de passage 20 comprend, en plus de la partie interne 21 disposée dans la cage 13 et coopérant avec l'arbre d'engagement 31, une partie externe 22 de forme allongée, sensiblement rectangulaire, solidaire de la partie interne 21 et faisant saillie vers l'extérieur de la cage 13 à travers une fente longitudinale 131 de celle-ci. La partie externe 22 s'étend sensiblement radialement par rapport à l'arbre d'engagement 31.

Cette fente présente, dans un plan perpendiculaire à l'axe longitudinal X-X', une largeur adaptée au mouvement d'engagement par rotation du doigt 20 autour de l'axe X-X'.

Plus précisément, la fente 131 est délimitée par deux bords longitudinaux dont l'écartement est suffisant pour permettre le débattement du doigt de passage 20 quand celui-ci passe d'une position de sélection à une position d'engagement. En position de sélection, le doigt est sensiblement à équidistance des deux bords. Il se rapproche de l'un ou l'autre des bords en passant à une position d'engagement. La partie externe 22 du doigt 20 se déplace longitudinalement dans la fente 131 quand le doigt 20 passe d'une position de sélection à une autre.

Le dispositif de commande comprend encore un organe 40 de verrouillage en position des éléments d'engagement 31 dans lesquels le doigt de passage 20 n'est pas engagé.

Cet organe de verrouillage 40 est lié au doigt de passage 20 en translation longitudinale, et comprend une partie de guidage 41 interne à la cage 13 et guidée en translation longitudinale par la cage 13, et une partie de blocage 42 solidaire de la partie de guidage 41 et faisant saillie vers l'extérieur de la cage 13 à travers la fente 131.

La partie de guidage 41 est constituée de deux plaques minces 411 parallèles et superposées, s'étendant chacune dans un plan perpendiculaire à l'axe longitudinal X-X' et présentant une forme générale allongée selon une direction perpendiculaire au doigt 20. Un jeu d'une épaisseur correspondant à l'épaisseur longitudinale du doigt 20 sépare les deux plaques 411.

Ces plaques 411 sont mutuellement solidarisées par des extrémités 412 respectives. A cet effet, le jeu entre les deux plaques parallèle est comblé par de la matière aux deux extrémités opposées des plaques.

Le doigt de passage 20 est engagé dans le jeu entre les deux plaques 411. Il peut débattre librement entre les plaques en rotation autour de l'axe longitudinal X-X' .

La cage 13 comprend des rainures de guidage longitudinales 134 parallèles, dans lesquelles les extrémités 412 des plaques sont engagées et sont libres de coulisser. Le profil des rainures correspond à la forme desdites extrémités.

La partie cylindrique 132 présente une ouverture formée sur tout un secteur angulaire, du côté de la partie externe 22 du doigt 20.

Les rainures 134 sont formées par des parties de la cage 13 solidaires de deux bords longitudinaux opposés de cette ouverture. Les rainures 134 sont disposées en vis-à-vis l'une de l'autre. Les bords longitudinaux des rainures 134 opposés à ladite ouverture définissent la fente longitudinale 131.

La partie externe 22 du doigt traverse ladite ouverture avant de s'engager dans la fente longitudinale 131.

Par ailleurs, la partie de blocage 42 de l'organe de verrouillage 40 comprend deux bras 421 disposés de part et d'autre du doigt de passage 20 suivant une direction longitudinale.

Ces bras 421 sont coudés et comprennent chacun une partie radiale 422 s'étendant à partir d'une des plaques 411 jusqu'à l'extrémité libre du doigt, et une partie longitudinale 423 prolongeant la première à angle droit dans une direction opposée au doigt 20.

La partie radiale 422 de chaque bras présente sensiblement la même forme que la partie externe 22 du doigt 20. Elle est donc mince et plate, présente une forme rectangulaire allongée dans une direction radiale par rapport à l'arbre d'engagement 31.

Les parties radiales 422 des deux bras s'étendent parallèlement et en vis-à-vis des deux faces opposées de la partie externe 22 du doigt 20.

Les parties longitudinales 423 sont également plates et minces et présentent sensiblement la même largeur que les parties radiales 422 et que la partie externe 22 du doigt 20.

Comme le montre la figure 4, ces parties longitudinales 423 s'étendent dans le prolongement l'une de l'autre, parallèlement à l'axe longitudinal X-X', de part et d'autre de l'extrémité libre de la partie externe 22 du doigt.

Les parties longitudinales 423, comme le montre la figure 1, sont disposées au fond du sillon formé par les éléments d'engagement en U 30. Seul l'élément d'engagement 30 disposé au niveau de la partie externe 22 du doigt 20 peut être déplacé. Les autres éléments d'engagement 30 sont bloqués en position par l'un ou l'autre des bras 421.

A cet effet, et pour obtenir un maintien en position très précis, le fond du sillon est conformé de façon à épouser étroitement la forme des parties longitudinales 423 des bras 421.

Les bras 421 se déplacent longitudinalement avec le doigt 20, de telle sorte que les éléments d'engagement 30 bloqués par l'organe de verrouillage 40 changent en fonction de la position de sélection occupée par le doigt 20.

Comme le montre la figure 4, les organes élastiques 12 prennent appui à la fois sur la partie de guidage 41 de l'organe de verrouillage 40 et sur la partie interne 21 du doigt 20.

Le dispositif de commande comprend un dispositif d'actionnement 50 de l'organe de sélection 10, muni d'un organe moteur 51, d'un pignon 52 entraîné en rotation par l'organe moteur 51, et d'une crémaillère 53 solidaire de l'organe de sélection 10 et coopérant avec le pignon 52.

L'organe moteur 51 est typiquement un moteur électrique fixé sur un carter enveloppant le dispositif de commande. Il entraîne en rotation, dans l'un ou l'autre de deux sens de rotation opposés, une vis sans fin 54, entraînant elle-même une roue dentée 55.

Le pignon 52 est coaxial et solidaire de la roue dentée 55. La crémaillère 53 s'étend parallèlement à l'axe longitudinal X-X'.

L'arbre d'engagement 31 est entraîné en rotation, dans l'un ou l'autre de deux sens de rotation opposés, par un autre moteur électrique, non représenté, directement ou par l'intermédiaire d'un réducteur.

Comme le montre la figure 1, la roue dentée 55 et le pignon 52 sont montés à rotation par un axe de rotation 56 dans un cadre 57, lui-même solidaire d'une platine de fixation 58.

Cette platine 58 présente également des orifices de guidage des tiges de commande 33 et de l'arbre d'engagement 31.

Dans une variante de réalisation, représentée sur la figure 2, le cadre 57 est remplacé par une pièce 59 portant des flasques 591 parallèles entre lesquels sont montés la roue dentée 55 et le pignon 52, et présentant un orifice 592 de passage de la vis sans fin 54 entraînant la roue dentée 55.

Le dispositif de commande de l'invention présente donc de nombreux avantages.

Il permet d'accélérer les changements de rapport car le mouvement de l'organe de sélection se fait en temps masqué.

Il est très compact, du fait du faible encombrement de la cage, et du fait de la disposition des organes moteurs, ces derniers pouvant par exemple être disposés dans des directions mutuellement perpendiculaires par rapport au doigt de passage.

Les éléments d'engagement sont maintenus en place avec précision par l'organe de verrouillage, ce qui réduit les jeux mécaniques et les pertes d'énergie. Cet organe de verrouillage est lui-même guidé très précisément par la cage dans un sens longitudinal, et par les plaques formant l'organe de verrouillage en rotation autour de l'axe X-X'.

Le dispositif de commande est également particulièrement simple, car le maintien en position d'engagement du doigt pendant le mouvement en temps masqué de l'organe de sélection est assuré par les éléments d'engagement eux-mêmes, sans faire intervenir d'autres éléments.

Le dispositif d'actionnement de l'organe de sélection est simple et précis.

Enfin, le dispositif est économique car il ne met en jeu qu'un petit nombre de pièces.

## Revendications

1. Dispositif de commande d'une boîte de vitesses manuelle pilotée comprenant un organe de sélection (10) sélectivement mobile par coulissement suivant un axe longitudinal (X-X') entre une pluralité de positions axiales prédéterminées, et un doigt (20) de passage de vitesses lié en translation longitudinale à l'organe de sélection (10) et sélectivement mobile d'abord par coulissement longitudinal de l'organe de sélection (10) entre une pluralité de positions longitudinales de sélection correspondant aux positions axiales de l'organe de sélection (10) et dans lesquelles le doigt (20) est engagé dans l'un de plusieurs éléments (30) d'engagement de rapports de la boîte de vitesses formant un empilement longitudinal, le dispositif de commande interne comprenant également un organe d'engagement (31) déplaçant sélectivement le doigt (20) à partir de chacune des positions de sélection jusqu'à une d'une pluralité de positions d'engagement pour réaliser l'engagement des rapports, le doigt (20) déplaçant par ce mouvement l'élément d'engagement (30) correspondant et venant s'intercaler dans l'empilement, **caractérisé en ce que** l'organe de sélection (10) comprend deux organes d'appui (11) mutuellement solidaires disposés de part et d'autre du doigt (20) le long de l'axe longitudinal (X-X'), et deux organes élastiques (12) interposés entre le doigt (20) et les organes d'appuis (11), de telle sorte que, quand le doigt (20) est dans une position d'engagement, un déplacement de l'organe de sélection (10) d'une position axiale à une autre entraîne la compression d'un des organes élastiques (12), le doigt (20) étant maintenu en position par l'empilement, **en ce que** l'organe d'engagement (31) est un arbre d'engagement s'étendant suivant l'axe longitudinal (X-X'), le doigt de passage (20) étant lié à cet arbre en rotation autour de l'axe longitudinal (X-X') pour réaliser le mouvement d'engagement et libre en translation longitudinale par rapport à cet arbre, **en ce que** l'organe de sélection (10) est libre en translation longitudinale et en rotation autour de l'axe longitudinal (X-X') par rapport à l'arbre d'engagement (31) et **en ce que** l'organe de sélection (10) comprend une cage (13) de maintien des organes élastiques (12) traversée par l'arbre d'engagement (31) et solidaire des deux organes d'appui (11), les organes élastiques (12) étant disposés dans la cage (13).

2. Dispositif selon la revendication 1, **caractérisé en ce que** le doigt de passage (20) comprend une partie (21) interne à la cage (13) coopérant avec l'arbre d'engagement (31) et une partie externe (22), solidaire de la partie interne (21), et faisant saillie vers l'extérieur de la cage (13) à travers une fente longitudinale (131) de celle-ci, la fente présentant une largeur adaptée au mouvement d'engagement par rotation du doigt (20) autour de l'axe longitudinal (X-X').

3. Dispositif selon la revendication 1 ou 2, **caractérisé en ce qu'**il comprend un organe de verrouillage (40) en position des éléments d'engagement (30) dans lesquels le doigt de passage (20) n'est pas engagé.

4. Dispositif selon les revendications 2 et 3 combinées, **caractérisé en ce que** l'organe de verrouillage (40) est lié au doigt de passage (20) en translation longitudinale, et comprend une partie de guidage (41) interne à la cage (13) et guidée en translation par la cage (13), et une partie de blocage (42) solidaire de la partie de guidage (41) et faisant saillie vers l'extérieur de la cage (13) à travers la fente (131).

5. Dispositif selon la revendication 4, **caractérisé en ce que** la partie de blocage (42) de l'organe de verrouillage (40) comprend deux bras (421) disposés de part et d'autre du doigt de passage (20), muni chacun d'une partie longitudinale (423) s'étendant parallèlement à l'axe longitudinal X-X'.

6. Dispositif selon l'une quelconque des revendications précédentes, **caractérisé en ce qu'**il comprend un dispositif d'actionnement (50) de l'organe de sélection (10), muni d'un organe moteur (51), d'un pignon (52) entraîné en rotation par l'organe moteur (51), et d'une crémaillère (53) solidaire de l'organe de sélection (10) et coopérant avec le pignon (52).

## Claims

1. A command device for a controlled manual gearbox comprising a selection member (10) selectively mobile by sliding along a longitudinal axis (X-X') between a plurality of predetermined axial positions, and a finger (20) for changing gears, linked in longitudinal translation to a selection member (10) and selectively mobile first by longitudinal sliding of the selection member (10) between a plurality of longitudinal selection positions corresponding to the axial positions of the selection member (10) and at which the finger (20) is engaged into one of several components (30) for engaging gears of the gearbox forming a longitudinal stack, the internal command device also comprising an engagement member (31) selectively displacing the finger (20) from each of the selection positions up to one of a plurality of engagement positions in order to achieve engagement of the gears, the finger (20) displacing by this movement the corresponding engagement component (30) and which will be inserted into the stack, **characterized in that** the selection member (10) comprises two supporting members (11) mutually integral with each other, positioned on either side of the finger (20) along the longitudinal axis (X-X'), and two elastic members (12) interposed between the finger (20) and the supporting members (11), so that when the finger (20) is in an engagement position, displacement of the selection member (10) from one axial position to another causes compression of one of the elastic members (12), the finger (20) being held in position by the stack, **in that** the engagement member (31) is an engagement shaft extending along the longitudinal axis (X-X'), the gear-changing finger (20) being linked to this shaft in rotation around the longitudinal axis (X-X') in order to achieve the engagement movement and being free in longitudinal translation relatively to this shaft, **in that** the selection member (10) is free in longitudinal translation and in rotation around the longitudinal axis (X-X') with respect to the engagement shaft (31), and **in that** the selection member (10) comprises a cage (13) for holding the elastic members (12), crossed by the engagement shaft (31) and integral with both supporting members (11), the elastic members (12) being positioned in the cage (13).

2. The device according to claim 1, **characterized in that** the gear-changing finger (20) comprises a portion (21) internal to the cage (13) cooperating with the engagement shaft (31) and an external portion (22) integral with the internal portion (21) and protruding towards the outside of the cage (13) through a longitudinal slot (131) of the latter, the slot having a width adapted to the engagement movement by rotation of the finger (20) around the longitudinal axis (X-X').

3. The device according to claim 1 or 2, **characterized in that** it comprises a locking member (40) in the position of the engagement components (30) into which the gear-changing finger (20) is not engaged.

4. The device according to combined claims 2 and 3, **characterized in that** the locking member (40) is linked to the gear-changing finger (20) in a longitudinal translation, and comprises a guiding portion (41) internal to the cage (13) and translationally guided by the cage (13), and a blocking portion (42) integral with the guiding portion (41) and protruding towards the outside of the cage (13) through the slot (131).

5. The device according to claim 4, **characterized in that** the blocking portion (42) of the locking member (40) comprises two arms (421) positioned on either side of the gear-changing finger (20), each provided with a longitudinal portion (423) extending parallel to the longitudinal axis (X-X').

6. The device according to any of the preceding claims, **characterized in that** it comprises a device (50) for actuating the selection member (10), provided with a driving member (51), with a pinion (52) driven into rotation by the driving member (51), and with a rack (53) integral with the selection member (10) and cooperating with the pinion (52).

## Patentansprüche

1. Steuervorrichtung für ein manuell gesteuertes Schaltgetriebe umfassend ein Auswahlglied (10), das wahlweise beweglich ist durch das Verschieben nach einer Längsachse (X-X') zwischen mehreren vorbestimmten Axialpositionen, und einen Hebel (20) zum Schalten der Gänge, der in Längsverschiebung mit dem Auswahlglied (10) verbunden ist und der wahlweise beweglich ist zuerst durch das Längsverschieben des Auswahlglieds (10) zwischen mehreren Längsauswahlpositionen, die den Axialpositionen des Auswahlglieds (10) entsprechen und in denen der Hebel (20) in das eine der mehreren Eingriffselemente (30) der Gänge des Schaltgetriebes eingreift, die einen Längsstapel bilden, wobei die interne Steuervorrichtung ebenfalls ein Eingriffsglied (31) umfasst, das wahlweise den Hebel (20) ab jeder der Auswahlpositionen bis zu einer der mehreren Eingriffspositionen verschiebt, um das Eingreifen der Gänge zu realisieren, wobei der Hebel (20) durch diese Bewegung das entsprechende Eingriffselement (30) verschiebt und sich in den Stapel einschiebt, **dadurch gekennzeichnet, dass** das Auswahlglied (10) zwei Stützglieder (11) umfasst, die fest miteinander verbunden sind und die beiderseitig vom Hebel (20) an der Längsachse (X-X') entlang angeordnet sind, und zwei elastische Glieder (12), die derart zwischen den Hebel (20) und die Stützglieder (11) eingeschoben sind, dass, wenn sich der Hebel (20) in einer Eingriffsposition befindet, eine Verschiebung des Auswahlglieds (10) von einer Axialposition zu einer anderen die Kompression einer der elastischen Glieder (12) bewirkt, wobei der Hebel (20) durch den Stapel in Position gehalten wird, **dadurch gekennzeichnet, dass** das Eingriffsglied (31) eine Eingriffswelle ist, die sich nach der Längsachse (X-X') erstreckt, wobei der Hebel zum Schalten (20) mit dieser Welle in Drehung um die Längsachse (X-X') verbunden ist, um die Eingriffsbewegung zu realisieren, und frei in Längsverschiebung im Verhältnis zu dieser Welle, **dadurch gekennzeichnet, dass** das Auswahlglied (10) frei in der Längsverschiebung und in Drehung um die Längsachse (X-X') im Verhältnis zur Eingriffswelle (31) ist, und **dadurch**, dass das Auswahlglied (10) einen Käfig (13) zum Halten der elastischen Glieder (12) umfasst, der von der Eingriffswelle (31) durchquert werden und fest mit den beiden Stützgliedern (11) verbunden ist, wobei die elastischen Glieder (12) in dem Käfig (13) angeordnet sind.

2. Vorrichtung nach Anspruch 1, **dadurch gekennzeichnet, dass** der Hebel zum Schalten (20) einen internen Teil (21) im Käfig (13) umfasst, der zusammen mit der Eingriffswelle (31) wirkt, und einen externen Teil (22), der fest mit dem internen Teil (21) verbunden ist, und der durch einen Längsschlitz (131) in dem Käfig aus dem Käfig (13) auskragt, wobei der Schlitz eine Breite aufweist, die der Eingriffsbewegung durch Drehung des Hebels (20) um die Längsachse (X-X') angepasst ist.

3. Vorrichtung nach Anspruch 1 oder 2, **dadurch gekennzeichnet, dass** sie ein Verriegelungsglied (40) der Position der Eingriffselemente (30) umfasst, in die der Hebel zum Schalten (20) nicht eingreift.

4. Vorrichtung nach miteinander kombinierten Ansprüchen 2 und 3, **dadurch gekennzeichnet, dass** das Verriegelungsglied (40) mit dem Hebel zum Schalten (20) in Längsverschiebung verbunden ist, und einen Teil zum Führen (41) im Käfig (13) umfasst, der in Verschiebung durch den Käfig (13) geführt wird, und einen Teil zum Blockieren (42), der fest mit dem Teil zum Führen (41) verbunden ist und der durch den Schlitz (131) aus dem Käfig (13) auskragt.

5. Vorrichtung nach Anspruch 4, **dadurch gekennzeichnet, dass** der Teil zum Blockieren (42) des Verriegelungsglieds (40) zwei Arme (421) umfasst, die beiderseitig vom Hebel zum Schalten (20) angeordnet sind, und die jeweils mit einem Längsteil (423) versehen sind, der sich parallel zur Längsachse X-X' erstreckt.

6. Vorrichtung nach einem der vorhergehenden Ansprüche, **dadurch gekennzeichnet, dass** sie eine Vorrichtung zur Betätigung (50) des Auswahlglieds (10) umfasst, die ausgestattet ist mit einem Antriebsglied (51), einem Ritzel (52), das in Drehung durch das Antriebsglied (51) angetrieben wird, und einer Zahnstange (53), die fest mit dem Auswahlglied (10) verbunden ist und die zusammen mit dem Ritzel (52) wirkt.
